# EUROPÄISCHE PATENTSCHRIFT

(11) **EP 2 730 696 B1**
(45) Veröffentlichungstag und Bekanntmachung des Hinweises auf die Patenterteilung: **18.07.2018**
(21) Anmeldenummer: 12192449.2
(22) Anmeldetag: 13.11.2012
(51) Int. Cl.: D06M 17/10, B32B 5/26, B32B 7/12, B65D 65/40, B65D 81/18, C23F 11/00

(54) **Spender für eine flüchtige, korrosionsinhibierende Komponente (VCI)**
Dispenser for a volatile corrosion-inhibitor component (VCI)
Distributeur pour un composant volatile inhibiteur de corrosion (VCI)

(43) Veröffentlichungstag der Anmeldung: 14.05.2014
(73) Patentinhaber: K.L. Kaschier- und Laminier GmbH, 48455 Bad Bentheim-Gildehaus (DE)
(72) Erfinder: Reinke, Sonja, 48485 Neuenkirchen (DE); Sundrup, Jürgen, 48599 Gronau (DE)
(74) Vertreter: Cohausz Hannig Borkowski Wißgott

(56) Entgegenhaltungen:
- EP-A1- 2 184 162
- EP-A1- 2 347 897
- WO-A2-2012/031232

## Beschreibung

Die Erfindung betrifft einen Spender für eine flüchtige, korrosionsinhibierende Komponente (VCI) zum Schutz von korrosionsanfälligen Gegenständen aus Metall, wobei der Spender aus einem Laminat mit einer ersten textilen Schicht und einer zweiten textilen Schicht gebildet ist, wobei zwischen der ersten textilen Schicht und der zweiten textilen Schicht eine Klebstoffschicht angeordnet ist, welche die korrosionsinhibierende Komponente enthält, wobei
- beide textilen Schichten aus einem Nonwoven-Spinnvlies bestehen und über einen Teil ihrer Dicke von der Klebstoffschicht durchdrungen sind,
- klebstoff- und VCI-freie Faserabschnitte der beiden Vliesschichten Außenflächen des Laminats bilden, und
- die Klebstoffschicht eine Vielzahl von Gasblasen aufweist mit einer Ausdehnung von weniger als 10 µm.
Spender für flüchtige, korrosionsinhibierende Komponenten sind aus der Praxis grundsätzlich bekannt. Die Spender setzen "Volatile Corrosion Inhibitors (VCI)" genannte Verbindungen frei, die korrosionsschützende Eigenschaften aufweisen. Aufgrund der Verdampfungseigenschaften der VCI gehen diese in die Gasphase über und werden dann auf Metalloberflächen eines zu schützenden Gegenstandes als monomolekularer Film abgeschieden. Die aus der Praxis bekannten Spender für VCI bestehen aus Papier, Schaumstoffen, Granulaten oder Flüssigkeiten. Um einen Gegenstand funktionssicher zu schützen, ist es erforderlich, dass die korrosionsinhibierende Komponente (VCI) schnell freigesetzt wird. Die Freisetzungsgeschwindigkeit der korrosionsinhibierenden Komponente ist bei den aus der Praxis bekannten Spendern jedoch verbesserungsbedürftig.

Die WO 2012/031232 A2 offenbart ein Laminat mit einer ersten textilen Schicht und einer zweiten Schicht, wobei zwischen der ersten textilen Schicht und der zweiten textilen Schicht eine Klebstoffschicht angeordnet ist, welche eine flüchtige, korrosionsinhibierende Komponente (VCI) enthält. Das Laminat weist eine wasserabweisende polymere Deckschicht auf, die auf einer der beiden textilen Schichten angeordnet ist und eine Außenfläche des Laminats bildet. Das Material kann als Verpackungsmaterial für korrosionsanfällige Gegenstände aus Metall verwendet werden. Für Gegenstände, die eine große korrosionsanfällige metallische Oberfläche aufweisen, ist die korrosionsinhibierende Wirkung der den Gegenstand umschließenden Verpackung nicht immer ausreichend und bedarf einer Ergänzung durch einen Spender, der eine große Menge der VCI-Komponente enthält und diese auch schnell freisetzt.

Vor diesem Hintergrund liegt der Erfindung das technische Problem zugrunde, einen Spender für eine flüchtige, korrosionsinhibierende Komponente anzugeben, der die korrosionsinhibierende Komponente (VCI) schnell freisetzt sowie einfach und problemlos handhabbar ist.

Zur Lösung des technischen Problems lehrt die Erfindung einen Spender der eingangs genannten Art zu schaffen, der dadurch gekennzeichnet ist,
- dass beide textile Schichten aus einem Nonwoven-Spinnvlies bestehen und über einen Teil ihrer Dicke von der Klebstoffschicht durchdrungen sind,
- dass klebstoff- und VCI-freie Faserabschnitte der beiden Vliesschichten Außenflächen des Laminats bilden, und
- dass die Klebstoffschicht eine Vielzahl von Gasblasen aufweist mit einer Ausdehnung von weniger als 10 µm.

Ein auf diese Weise aufgebauter Spender hat die wesentlichen Vorteile, dass die korrosionsinhibierenden Komponenten besonders schnell und umfangreich freigesetzt werden. Dies wird zum einen dadurch erreicht, dass der zwischen die Fasern nach außen gedrückte Klebstoff eine flächenmäßig erhebliche größere Abgabefläche besitzt und, dass zum anderen die in der Klebstoffschicht befindlichen Gasblasen die Abgabefläche noch einmal erheblich vergrößern. Darüber hinaus bilden die Innenräume der Gasblasen ein wesentlich vergrößertes Depot des VCI-Mittels.

Bevorzugt wird der erfindungsgemäße Spender dort eingesetzt, wo bereits eine Transport- oder Lagerverpackung vorhanden ist. In vorteilhafter Weise können Hohlräume bzw. Innenräume der Verpackung durch Beigabe eines erfindungsgemäßen Spenders ausgerüstet werden. Die VCI-Wirksubstanz ist beispielsweise eine Verbindung eines primären Amins und/oder eines sekundären Amins und/oder eines tertiären Amins. Vorteilhafterweise wird die VCI-Wirksubstanz aus einer Aminkomponente und einer Carbonsäure unter Wasserabspaltung generiert. Die Carbonsäure kann insbesondere eine Caprylsäure sein. Die Aminkomponente ist beispielsweise ein Ethanolamin. Es liegt im Rahmen der Erfindung, dass die VCI-Wirksubstanz einen Wassergehalt von beispielsweise 0,3 bis 1 Gew.-% aufweist. Der erfindungsgemäße Spender für eine flüchtige korrosionsinhibierende Komponente zum Schutz von korrosionsanfälligen Gegenständen aus Metall eignet sich beispielsweise zum Schutz von metallischen Gegenständen aus Stahl, Edelstahl, Aluminium, Kupfer, Messing und dergleichen.

Erfindungsgemäß ist die erste textile Schicht und die zweite textile Schicht ein Nonwoven-Spinnvlies, wobei die Vliesschlichten eine große von Fasern gebildete Oberfläche aufweisen, so dass eine gleichmäßige VCI-Abgabe in allen Richtungen bzw. ungerichtet erfolgt. Die Vliesschichten gewährleisten zudem eine schnelle Wirkstoffabgabe, so dass der Gegenstand aus Metall zuverlässig und schnell durch das VCI vor Korrosion geschützt wird. Bevorzugt weisen beide Vliesschichten eine gleiche bzw. im Wesentlichen gleiche Durchlässigkeit für die VCI-Wirksubstanz auf.

Erfindungsgemäß sind die erste textile Schicht und die zweite textile Schicht jeweils lediglich über einen Teil ihrer Dicke von der Klebstoffschicht durchdrungen. Auf diese Weise wird sichergestellt, dass die Oberseite und die Unterseite des Laminats jeweils trocken und klebstofffrei ausgebildet sind. Die Fasern der textilen Schichten sind abschnittsweise mit dem Klebstoff beschichtet. Der Klebstoff bildet einen Mantel um zumindest einen Teil der Fasern der beiden textilen Schichten, wobei der Mantel sich über einen Längenabschnitt der Fasern erstreckt. Erfindungsgemäß sind Faserabschnitte der ersten textilen Schicht und Faserabschnitte der zweiten textilen Schicht klebstofffrei ausgebildet, wobei die klebstoff- und VCI-freien Faserabschnitte der beiden Vliesschichten die Außenflächen des Laminats bilden.

Zweckmäßigerweise weisen die beiden textilen Schichten jeweils ein Flächengewicht von 10 bis 50 g/m² auf. Bevorzugt sind Vliesschichten mit einem Flächengewicht von jeweils 20 bis 40 g/m². Die Vliesschichten können aus Polyolefinfasern bestehen. Vorzugsweise bestehen die Vliesschichten des Spenders aus Polyethylenfasern. Eine weitere vorteilhafte Ausgestaltung des erfindungsgemäßen Spenders sieht vor, dass die textilen Schichten jeweils aus einem Polyamidgewebe bestehen.

Zweckmäßig sind die erste Vliesschicht und die zweite Vliesschicht hinsichtlich der Vliesstruktur, des Fasermaterials und der Schichtstärke gleich bzw. im Wesentlichen gleich

Die Klebstoffschicht kann insbesondere ein Flächengewicht von 4 bis 10 g/m² aufweisen, wobei ein Flächengewicht der Klebstoffschicht von 6 bis 8 g/m² bevorzugt ist. Es liegt im Rahmen der Erfindung, dass die Klebstoffschicht zwei bis 2 bis 20 Gew.-% der korrosionsinhibierenden Komponente enthält. Gemäß einer bevorzugten Ausführungsform beinhaltet die Klebstoffschicht 5 bis 15 Gew.-% und besonders bevorzugt ungefähr 10 Gew.-% VCI. Die Gewichtsprozentangaben beziehen sich auf das Gesamtgewicht von Klebstoff und VCI in der Klebstoffschicht.

Empfohlenermaßen ist der Klebstoff ein Reaktionsklebstoff, der bei Zutritt von Feuchtigkeit, insbesondere von Luftfeuchtigkeit auspolymerisiert. Bevorzugt ist der Klebstoff ein lösungsmittelfreier Polyurethanklebstoff (PUR-Klebstoff) auf Basis aliphatischer oder aromatischer Isocyanate. Zweckmäßigerweise kann dem Klebstoff Wasser, beispielsweise mit der flüchtigen, korrosionsinhibierenden Komponente zugeführt werden.

Es liegt im Rahmen der Erfindung, dass die Klebstoffschicht eine Vielzahl von Gasblasen mit einer Ausdehnung von weniger als 10 µm enthält. Vorzugsweise hat der Hauptanteil der Gasblasen eine Blasengröße zwischen 0,1 µm und 1 µm. Das Auspolymerisieren des Klebstoffs kann vorteilhafterweise mit einer Gasbildung einhergehen. Es empfiehlt sich, den Anteil, die Verteilung und die Größe der in der ausgehärteten Klebstoffschicht enthaltenen Gasbläschen beispielsweise durch den Wassergehalt bzw. die Feuchtigkeit des Klebstoffs einzustellen. Bezogen auf das Gesamtgewicht des flüchtigen Korrosionsinhibitors und Wasser beträgt der Wassergehalt beispielsweise zwischen 0,2 Gew.-% und 7 Gew.-%, vorzugsweise zwischen 0,5 Gew.-% und 3 Gew.-%. Grundsätzlich ist es möglich, die Gasbläschen im Klebstoff durch physikalische Verfahren, wie beispielsweise die Erzeugung eines Unterdrucks, zu erzeugen. Bevorzugt sind die Gasbläschen gleichmäßig in der Klebstoffschicht verteilt. Vorzugsweise werden die Bedingungen beim Auspolymerisieren des Klebstoffs derart eingestellt, dass die Struktur des ausgehärteten Klebstoffs einem aufgeschäumten Kunststoff gleicht. Die Schichtdicke der ausgehärteten Klebstoffschicht ist bevorzugt zweimal bis fünfmal so dick wie die Dicke der auf die erste textile Schicht und/oder zweite textile Schicht aufgebrachten Klebstoffschicht ohne Gasblasen.

Gegenstand der Erfindung ist auch eine Verpackung eines korrosionsanfälligen Gegenstandes aus Metall mit einer den Gegenstand umgebenden gasdichten Hülle und einem Spender nach einem der Ansprüche 1 bis 8, wobei der Spender innerhalb des von der Hülle eingeschlossenen Raums als separates Element angeordnet ist. Es ist möglich, dass in dem Innenraum der Verpackung eine Mehrzahl bzw. Vielzahl von Spendern angeordnet sind.

Der Erfindung liegt die Erkenntnis zugrunde, dass der erfindungsgemäße Spender für eine flüchtige, korrosionsinhibierende Komponente vorteilhaft schnell die korrosionsinhibierende Komponente freisetzt, wobei die Konzentration der VCI-Wirksubstanz über die gesamte Materialfläche konstant bzw. im Wesentlichen konstant ist. Dadurch wird die Abgabe einer großen VCI-Menge in alle Raumrichtungen sichergestellt. Der erfindungsgemäße Spender eignet sich zur Verwendung in konventionellen Transport- oder Lagerverpackungen, insbesondere in Folienverpackungen und geschlossenen Folienumhüllungen. Der erfindungsgemäße Spender kann verwendet werden, um in einer konventionellen, geschlossenen Verpackung eine korrosionsinhibierende Atmosphäre aufzubauen. Ferner kann der erfindungsgemäße Spender auch zur Ergänzung einer korrosionsinhibierenden Wirkung einer Korrosionsschutzverpackung in großen Verpackungseinheiten genutzt werden.

## Patentansprüche

1. Spender für eine flüchtige, korrosionsinhibierende Komponente (VCI) zum Schutz von korrosionsanfälligen Gegenständen aus Metall, wobei der Spender aus einem Laminat mit einer ersten textilen Schicht und einer zweiten textilen Schicht gebildet ist, wobei zwischen der ersten textilen Schicht und der zweiten textilen Schicht eine Klebstoffschicht angeordnet ist, welche die korrosionsinhibierende Komponente enthält, **dadurch gekennzeichnet,**
- **dass** beide textile Schichten aus einem Nonwoven-Spinnvlies bestehen und über einen Teil ihrer Dicke von der Klebstoffschicht durchdrungen sind,
- **dass** klebstoff- und VCI-freie Faserabschnitte der beiden Vliesschichten Außenflächen des Laminats bilden, und
- **dass** die Klebstoffschicht eine Vielzahl von Gasblasen aufweist mit einer Ausdehnung von weniger als 10 µm.

2. Spender nach Anspruch 1, **dadurch gekennzeichnet, dass** der Hauptteil der Gasblasen eine Blasengröße zwischen 0,1 µm und 1 µm aufweist.

3. Spender nach Anspruch 1 oder 2, **dadurch gekennzeichnet, dass** die textilen Schichten jeweils ein Flächengewicht von 10 bis 50 g/m² aufweisen.

4. Spender nach einem der vorherigen Ansprüche, **dadurch gekennzeichnet, dass** die textilen Schichten aus Polyolefinfasern, vorzugsweise Polyethylenfasern, bestehen.

5. Spender nach einem der vorherigen Ansprüche, **dadurch gekennzeichnet, dass** die Klebstoffschicht ein Flächengewicht von 4 bis 10 g/m² aufweist.

6. Spender nach einem der vorherigen Ansprüche, **dadurch gekennzeichnet, dass** die Klebstoffschicht 2 bis 20 Gew.-% der korrosionsinhibierenden Komponente beinhaltet.

7. Spender nach einem der vorherigen Ansprüche, **dadurch gekennzeichnet, dass** der Klebstoff ein Reaktionsklebstoff ist, der bei Zutritt von Feuchtigkeit, insbesondere von Luftfeuchtigkeit auspolymerisiert.

8. Verpackung eines korrosionsanfälligen Gegenstandes aus Metall mit einer den Gegenstand umgebenden gasdichten Hülle und einem Spender nach einem der vorherigen Ansprüche, wobei der Spender innerhalb des von der Hülle eingeschlossenen Raums als separates Element angeordnet ist.

## Claims

1. Dispenser for a volatile corrosion inhibitor (VCI) component for protecting corrosion-susceptible metal articles, the dispenser being formed of a laminate having a first textile layer and a second textile layer, there being disposed, between the first textile layer and the second textile layer, a layer of adhesive that comprises the corrosion inhibitor component, **characterized**
- **in that** both textile layers consist of a spun-bonded nonwoven and over a part of their thickness are pervaded by the layer of adhesive,
- **in that** adhesive-free and VCI-free fibre sections of the two nonwoven layers form outer faces of the laminate, and
- **in that** the layer of adhesive comprises a multiplicity of gas bubbles having an extent of less than 10 µm.

2. Dispenser according to Claim 1, **characterized in that** the majority of the gas bubbles have a bubble size of between 0.1 µm and 1 µm.

3. Dispenser according to Claim 1 or 2, **characterized in that** the textile layers each have a basis weight of 10 to 50 g/m².

4. Dispenser according to any of the preceding claims, **characterized in that** the textile layers consist of polyolefin fibres, preferably polyethylene fibres.

5. Dispenser according to any of the preceding claims, **characterized in that** the layer of adhesive has a basis weight of 4 to 10 g/m².

6. Dispenser according to any of the preceding claims, **characterized in that** the layer of adhesive comprises 2 to 20 wt% of the corrosion inhibitor component.

7. Dispenser according to any of the preceding claims, **characterized in that** the adhesive is a reactive adhesive which polymerizes to completion on ingress of moisture, more particularly of atmospheric moisture.

8. Packaging for a corrosion-susceptible metal article, having a gas-tight shell surrounding the article and having a dispenser according to any of the preceding claims, the dispenser being disposed as a separate element within the space enclosed by the shell.

## Revendications

1. Distributeur pour un composant volatil inhibant la corrosion (IVC) pour la protection d'articles en métal sensibles à la corrosion, le distributeur étant formé par un stratifié. comprenant une première couche textile et une deuxième couche textile, une couche adhésive qui contient le composant inhibant la corrosion étant agencée entre la première couche textile et la deuxième couche textile, **caractérisé en ce que**
- les deux couches textiles sont constituées par un tissu non-tissé et sont pénétrées sur une partie de leur épaisseur par la couche adhésive,
- des sections fibreuses sans adhésif et sans IVC des deux couches de non-tissé forment des surfaces extérieures du stratifié, et
- la couche adhésive comprend une pluralité de bulles de gaz ayant une dimension inférieure à 10 µm.

2. Distributeur selon la revendication 1, **caractérisé en ce que** la partie principale des bulles de gaz présentent une taille de bulles comprise entre 0,1 µm et 1 µm.

3. Distributeur selon la revendication 1 ou .2, **caractérisé en ce que** les couches textiles présentent chacune un poids superficiel de 10 à 50 g/m².

4. Distributeur selon l'une quelconque des revendications précédentes, **caractérisé en ce que** les couches textiles sont constituées par des fibres de polyoléfine, de préférence des fibres de polyéthylène.

5. Distributeur selon l'une quelconque des revendications précédentes, **caractérisé en ce que** la couche adhésive présente un poids superficiel de 4 à 10 g/m².

6. Distributeur selon l'une quelconque des revendications précédentes, **caractérisé en ce que** la couche adhésive contient 2 à 20 % en poids du composant inhibant la corrosion.

7. Distributeur selon l'une quelconque des revendications précédentes, **caractérisé en ce que** l'adhésif est un adhésif réactif, qui polymérise au contact de l'humidité, notamment de l'humidité de l'air.

8. Emballage d'un article en métal sensible à la corrosion comprenant une enveloppe étanche aux gaz qui entoure l'article et un distributeur selon l'une quelconque des revendications précédentes, le distributeur étant agencé à l'intérieur de l'espace entouré par l'enveloppe sous la forme d'un élément séparé.
